# EUROPEAN PATENT APPLICATION

(11) **EP 1 842 839 A1**
(43) Date of publication of application: **10.10.2007**
(21) Application number: 07007116.2
(22) Date of filing: 04.04.2007
(51) Int. Cl.: C04B 38/00

(54) **Porous body and producing method thereof**

(30) Priority: 04.04.2006 JP 2006102749; 16.01.2007 JP 2007006842; 13.03.2007 JP 2007062897
(71) Applicant: Covalent Materials Corporation, Shinagawa-ku, Tokyo (JP)
(72) Inventor: Kitagawa, Fumihiko, Hadano-shi Kanagawa 257-8566 (JP); Imaizumi, Takafumi, Hadano-shi Kanagawa 257-8566 (JP)
(74) Representative: HOFFMANN EITLE

(57) **Abstract**

According to a producing method including; preparing a foaming slurry by agitating and blending a dispersion medium containing hollow glass or ceramic particles having an average particle diameter of 1 µm or more, a dispersant and a foaming agent to foam; obtaining a dried body by dropping the foaming slurry in liquid nitrogen, followed by freeze drying in a vacuum; and sintering the dried body to obtain a spherical porous body having open pores interconnected over an entirety, a porous body that is highly communicative, has sufficient mechanical strength and is suitable as a cell culture carrier for microcarrier culture can be provided.

## Description

### BACKGROUND OF THE INVENTION

### FIELD OF THE INVENTION

The present invention relates to a porous body suitable for lightweight materials and high strength materials in filters and bioreactors and various kinds of functional materials, in particular, three-dimensional cell culture modules, bone substitutes, DDS carriers and carriers for microcarrier culture, and a producing method thereof.

### DESCRIPTION OF THE RELATED ART

In recent years, a cell culture technology is applied in various industries and studies such as productions of antibody preparation. As one of these, there is a high-density culture technology called a microcarrier culture where cells are densely cultured.

In the microcarrier culture, in a spinner flask, with a blade to which a stirring piece is fastened rotating, a culture is agitated together with a carrier to which cells adhered to uniformly supply oxygen and nutrition to cells to densely culture the cells.

As the cell culture carrier for the microcarrier culture, bead-like carriers such as glass or polystyrene having about 1 of specific gravity are in use.

However, in the microcarrier culture, there are problems in that the blade and carriers or carriers each other collide to result in a dropout of the cells from the carries or death of the cells to deteriorate the culture efficiency.

This results an existing carrier for the microcarrier culture is a spherical dense body and the cell can adhere to and multiply on only a surface of the carrier.

Accordingly, in order to overcome the problems, it is considered that a space where the cells can multiply has only to be present inside of the carrier. That is, in order to multiply the cells inside of the carrier, as the carrier for the microcarrier culture, a particulate porous body having pores communicating inside of the porous body can be used.

As a method for preparing such a particulate porous body, for instance, in Japanese Patent Application Laid-Open 2001-58885, a method where a ceramic slurry containing air bubbles is dropped in liquid nitrogen by use of a syringe, followed by freeze drying, further followed by sintering, still further followed by applying ultrasonic vibration is disclosed.

However, according to a method disclosed in the JP-A-2001-58 885, while the inside of the obtained particulate porous body can be made porous, on a surface thereof, a dense layer is formed. In order to remove the dense layer, the ultrasonic vibration is applied. However, it is difficult to control intensity and time of the ultrasonic vibration so as to peel only the dense layer with a porous structure of the inside maintained. In some cases, the porous layer is destroyed and the mechanical strength and a particulate shape cannot be maintained.

### SUMMARY OF THE INVENTION

The invention was carried out to overcome the technical problems and intends to provide a porous body that is highly interconnected, has sufficient mechanical strength and can be suitably used as a cell culture carrier for the microcarrier culture and a producing method thereof.

The porous body involving the invention includes closed pores and open pores in which a plurality of spherical pores is communicated over an entirety.

Being formed a porous structure with closed pores and open pores and with the open pores communicated over an entirety, a porous body that is highly communicative, lightweight and floatable in an aqueous solution can be obtained.

The porous body, from the viewpoint of obtaining lightweight and high mechanical strength porous body, is preferably 50% or more and 98% or less in the porosity and 20 µm or more and 1000 µm or less in the average pore diameter of the spherical pores communicative over an entirety.

Furthermore, it is preferred that 10% by weight or more of particles constituting a skeleton of the porous body is ceramic or glass hollow particles.

Being formed the closed pores from hollow particles, a lightweight porous body low in the apparent density, high in the communicating properties and high in the porosity can be obtained.

The hollow particle, from the viewpoint of sufficiency of sintering and obtaining sufficient mechanical strength, preferably has a particle diameter of 400 µm or less.

Furthermore, the porous body, from the viewpoint of securing the lightweightness and sufficient mechanical strength, preferably has the apparent density of 0.3 g/ml or more and equal to or less than 60 % of a theoretical density obtained by the ceramic or glass raw material composition.

Still furthermore, a material of the porous body can be appropriately selected depending on objects and applications. However, from the viewpoint of securing the lightweightness and sufficient mechanical strength, the material is preferably selected from at least one kind of calcium phosphate based ceramics, alumina, titania, zirconia, calcium carbonate, silicon carbide, silicon nitride, silica, alumina-silica and mullite.

Such a porous body is a spherical body having the apparent density of 0.8 g/ml or more and 2 g/ml or less and a diameter of 50 µm or more and 5 mm or less and can be preferably used as a scaffold

Since cells can be present inside of the carrier, even when the carriers collide each other frequently, the cells are hardly damaged and can be efficiently and stably multiplied. Accordingly, the carrier can be preferably used particularly as a microcarrier for cell culture.

Furthermore, a producing method involving an aspect of the invention of a porous body includes; preparing a foaming slurry by agitating and blending glass or ceramic hollow particles, glass or ceramic solid particles, a dispersant and a foaming agent in a dispersing medium to foam; obtaining a green body by gelating the foaming slurry, followed by dewatering and drying; and sintering the green body.

According to the producing method like this, the porous body can be readily obtained.

A producing method involving another aspect of the invention of a porous body includes; preparing a foaming slurry by agitating and blending a dispersion medium containing glass or ceramic hollow particles having an average particle diameter of 1 µm or more and 400 µm or less, a dispersant and a foaming agent to foam; obtaining a dried body by dropping the foaming slurry in liquid nitrogen, followed by freeze drying in a vacuum; and sintering the dried body to obtain a spherical porous body having open pores interconnecting over an entirety.

According to the producing method, a spherical porous body that has open pores, is highly interconnected and has sufficient mechanical strength that allows retaining a spherical shape can be readily obtained.

In the producing method, in the preparing a foaming slurry, ceramic or glass solid particles having an average particle diameter of 1000 nm or less can be preferably added.

Being used such nano-level size particles with disperse, the mechanical strength of the prepared spherical porous body can be improved and the apparent density thereof can be controlled.

As mentioned above, the porous body involving the invention, being excellent in the interconnecting properties and having open pores and closed pores, is lightweight and high in the mechanical strength and can be preferably used as filters and heat-insulating materials.

Furthermore, since the spherical porous body has sufficient mechanical strength that can retain a spherical shape, cells can exist inside of the carrier. Accordingly, even when carriers collide each other frequently in the microcarrier culture, the cells are hardly damaged and efficient and stable cell multiplication can be realized. As the result, the spherical porous body can be preferably applied to three-dimensional cell culture modules, bone substitutes, DDS carriers and carriers for microcarrier culture.

Stillfurthermore,according to the producing methodinvolving the invention, without going through a process that necessitates a complicated control such as a ultrasonic process, such the spherical porous body as mentioned above, in which a particle diameter and a pore diameter are controlled can be readily prepared. Furthermore, when an amount of hollow particles is controlled, the specific gravity of the spherical porous body can be readily controlled as well.

### BRIEF DESCRIPTION OF THE DRAWINGS

FIG. 1 is a diagram schematically showing a configuration of a porous body involving the invention.
FIG. 2 is a schematic enlarged diagram of a portion A of FIG. 1.
FIG. 3-1 is an electron micrograph (× 10000) of a ceramic porous body (sintered body) involving example 1.
FIG. 3-2 is an electron micrograph (× 100) of a ceramic porous body (sintered body) involving example 1.
FIG. 4-1 is an electron micrograph (× 10000) of a ceramic porous body (sintered body) involving example 2.
FIG. 4-2 is an electron micrograph (× 100) of a ceramic porous body (sintered body) involving example 2.
FIG. 5-1 is an electron micrograph (× 10000) of a titania ceramic porous body (sintered body) involving comparative example 1.
FIG. 5-2 is an electron micrograph (× 100) of a titania ceramic porous body (sintered body) involving comparative example 1.
FIG. 6-1 is an electron micrograph (× 30) of a ceramic sintered body involving example 3.
FIG. 6-2 is an electron micrograph (× 100) of a ceramic sintered body involving example 3.
FIG. 7-1 is an electron micrograph (× 100) of a ceramic sintered body involving comparative example 2.
FIG. 7-2 is an electron micrograph (× 1000) of a ceramic sintered body involving comparative example 2.

### BEST MODE FOR CARRYING OUT THE INVENTION

Hereinafter, the invention will be more detailed with reference to the drawings.

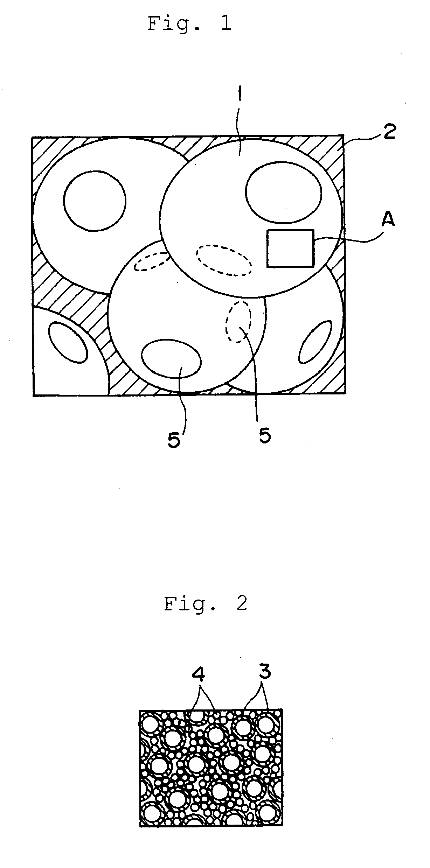

A schematic structure of a porous body involving the invention is shown in FIGS. 1 and 2.

As shown in FIG. 1, in the porous body involving the invention, a plurality of adjacent spherical pores 1 is communicated each other through a interconnected pore 5 all over an entirety.

FIG. 2 is an enlarged diagram of a portion A of the spherical pore 1. As shown in FIG. 2, the spherical pore 1 itself or a skeleton 2 constituting a porous body is constituted of hollow particles 3 and solid particles 4.

That is, the porous body involving the invention is a porous body having a closed pore and an open pore in combination, the open pore being communicative all over an entirety.

The porous body having such a configuration is lightweight and can float even in an aqueous solution.

The porous body preferably has the porosity of 50% or more and 98% or less and an average pore diameter of spherical pores interconnected all over an entirety of 20 µm or more and 1000 µm or less.

In the case of the porosity being less than 50% or the average pore diameter being less than 20 µm, when the porous body is used as a cell culture carrier for a microcarrier culture, the characteristics as the porous body cannot be exerted.

On the other hand, in the case of the porosity exceeding 98% or the average pore diameter exceeding 1000 µm, the porous body is deteriorated in the mechanical strength and difficult to maintain a shape of the porous body. Accordingly, the porosity is preferably 80 % or more and 97 % or less, and the average pore diameter is preferably 100 µm or more and 500 µm or less.

The porosity can be obtained from the density and a theoretical density of the porous body and the average porosity can be obtained by use of a resin embedding method described in Japanese Patent No. 3400740. Furthermore, the apparent density can be measured, by use of an Archimedes method, with a solvent such as methanol low in the specific gravity.

Still furthermore, in the porous body, a skeleton thereof or a spherical pore itself is preferably constituted of hollow particles and among particles constituting the porous body at least 10% by weight or more is preferably constituted of hollow particles. Furthermore, in addition to the viewpoint of mechanical strength, since when the apparent density becomes closer to 1 the agitation can be readily applied, a ratio of the hollow particles is preferably 50% by weight or more and 95% by weight or less.

When the hollow particles are used as a raw material that forms a skeleton of the porous body, different from an existing ceramic porous body where almost all of pores are made of interconnected open pores, a lightweight porous body low in the apparent density and high in the porosity can be obtained.

The hollow particle preferably has a particle diameter of 400 µm or less.

When the particle diameter exceeds 400 µm, since a contact area between the hollow particles becomes smaller, the sintering between the hollow particles is not sufficiently forwarded; accordingly, a porous body having sufficient mechanical strength cannot be obtained.

The particle diameter is more preferred to be 5 µm or more and 100 µm or less.

Furthermore, all particles that constitute the porous body may be hollow particles. However, from the viewpoint of an improvement in the mechanical strength, the hollow particles and solid particles are preferably used together.

The solid particle as well has a particle diameter, from the viewpoint of obtaining sufficient sintering property, preferably of 1000 nm or less and more preferably of 500 nm or less.

Thus, being blended the hollow particles and solid particles and dispersed at nano level, the porous body can be strengthened and, by controlling a mixing ratio of both, the apparent density can be controlled.

For instance, when, to titania solid particles having the theoretical density of 4.23 g/ml, titania hollow particles having the apparent density of 0. 7 g/ml is blended twice or more by weight, the apparent density of the porous body can be made 1 g/ml or less.

The apparent density is, from the viewpoint of securing sufficient mechanical strength in a lightweight porous body, preferably 0.3 g/ml or more and equal to or less than 60 % of a theoretical density (true density) obtained by the raw material composition which is a dense body with no pore.

The porous body is preferably made of at least one kind selected from calcium phosphate based ceramics as represented by hydroxyapatite and β-calcium phosphate tribasic, or alumina, titania, zirconia, calcium carbonate, silicon carbide, silicon nitride, silica, alumina-silica and mullite.

These may be used singularly or as a composite material and can be appropriately selected depending on objects and applications.

Furthermore, solid particles and hollow particles of ceramics or glass constituting a skeleton of the porous body may be made of same material or different materials.

Such the porous body involving the invention can be readily obtained according to a producing method that includes; preparing a foaming slurry by agitating and blending glass or ceramic hollow particles, glass or ceramic solid particles, a dispersant and a foaming agent in a dispersing medium to foam; obtaining a green body by gelating the foaming slurry, followed by dewatering and drying; and sintering the green body.

One example of specific producing methods is shown in the following example.

A producing method involving another aspect of the invention of a porous body includes; preparing a foaming slurry by agitating and blending a dispersion medium containing glass or ceramic hollow particles having an average particle diameter of 1 µm or more, a dispersant and a foaming agent to foam; obtaining a vacuum freeze dried body by dropping the foaming slurry, followed by freeze drying in a vacuum; and sintering the dried body to obtain a spherical porous body.

According to the producing method like this, a highly interconnected spherical porous body can be readily prepared.

At first, in the preparing a foaming slurry, a dispersion medium containing glass or ceramic hollow particles having an average particle diameter of 1 µm or more, a dispersant and a foaming agent are agitated and blended to foam.

To the foaming slurry, other than the dispersant and the foaming agent, an additive for stably preparing the slurry can be appropriately added as needs arise.

The ceramic or glass hollow particles are particles that constitute a skeleton of a spherical porous body that is prepared and have an average particle diameter of 1 µm or more.

Thus, when hollow particles having a large average particle diameter are used as a skeleton material of the spherical porous body, a spherical porous body that, on a surface thereof, does not have a dense layer and has open pores can be obtained.

When the hollow particles have an average particle diameter of less than 1 µm, the degree of freedom of the particles become larger, and, in the dropping the foaming slurry followed by freeze drying, a dense layer is formed on a surface of the freeze dried body and thereby open pores are clogged.

However, when the particles are too large, since a contact area between particles becomes smaller, the sintering between particles does not sufficiently proceed and thereby a spherical porous body having sufficient mechanical strength cannot be obtained; accordingly, the average particle diameter is preferably 400 µm or less.

The average particle diameter is preferably 5 µm or more and 100 µm or less.

In the preparing a foaming slurry, the hollow particles relatively large in the particle diameter like the above are used as a main skeleton raw material of the spherical porous body. However, other than the above, ceramic or glass solid particles having a particle diameter of 1000 nm or less may be added.

The solid particles are appropriately added, as needs arise, to control the apparent density or to improve the mechanical strength.

The particle diameter thereof is preferably smaller than that of the hollow particles and more preferably 500 nm or less in the average particle diameter. Being dispersed such nano level particles, the mechanical strength of a porous body that is prepared can be improved.

In the next place, in the obtaining a dried body, the foaming slurry is dropped in liquid nitrogen followed by freeze drying in a vacuum to obtain a dried body.

The foaming slurry can be dropped with a syringe. Depending on a nozzle diameter at a tip of the syringe, a size of a spherical porous body that is prepared can be controlled.

The size can be appropriately designed depending on objects and applications of the spherical porous body. However, when the spherical porous body is used as a cell culture carrier for microcarrier culture like the above, the nozzle diameter is preferably set at 150 µm or more and 1000 µm or less.

Then, when the dried body is sintered, a spherical porous body having open pores interconnected all over an entirety can be obtained.

Such the porous body can be preferably used for, other than applications as filters and heat insulating materials, a scaffold.

The cell culture carrier made of the porous body has a sufficient space for multiplying cells inside thereof and can be preferably used as a scaffold. Furthermore, the porous body has interconnected pores having a pore diameter of 20 µm or more that is larger than the cell itself; accordingly, the cells can readily intrude inside thereof, oxygen and nutrition can be sufficiently supplied to the cells and a detrimental constituent can be smoothly removed.

In particular, when the porous body is used as a cell culture carrier for microcarrier culture, since cells can exist inside of the carrier, even when, in a fermenter, the carriers become dense and the collision frequency is increased, the cells are hardly damaged and can be efficiently multiplied with stability. In this case, since the porous body is used floated and agitated in a culture solution, the porous body is preferably formed into a spherical body having the apparent density of 0.8 g/ml or more and 2 g/ml or less and a diameter of 50 µm or more and 5 mm or less. The apparent density is preferably 1.4 g/ml or less.

### EXAMPLES

In what follows, the invention will be more specifically described with reference to examples. However, the invention is not restricted to examples below.

### Example 1

With, as a ceramic raw material, 202.5 g of titania powder having an average particle diameter of 180 nm; as a dispersant, 0.11 g of ammonium polycarbonate and 8.1 g of polyethyleneimine; and, as a dispersion solvent, 67 . 5 g of pure water, these were agitated and blended for 15 hr with a ball mill method, and thereby, a solid particle slurry was prepared.

To the slurry, 1.2 g of Emal (trademark) was added as a foaming agent, followed by agitating, thereby a foaming slurry was obtained.

Furthermore, 210 g of hollow particles made of alumina-silica having an average particle diameter of 75 µm was added, followed by agitating and blending.

Subsequently, as a gelling agent, 1.1 g of sorbitol polyglycidyl ether was added, followed by pouring in a 150 mm × 150 mm × 30 mmmold, further followed by moistening and drying, and thereby a green body of a ceramic porous body was obtained.

The molded body was sintered at 1400°C for 2 hr and thereby a 137 mm × 133 mm × 22 mm ceramic porous body (sintered body) was obtained.

The apparent density of the sintered body was 1.87 g/ml and the porosity was 84.8%. An average pore diameter was 400 µm.

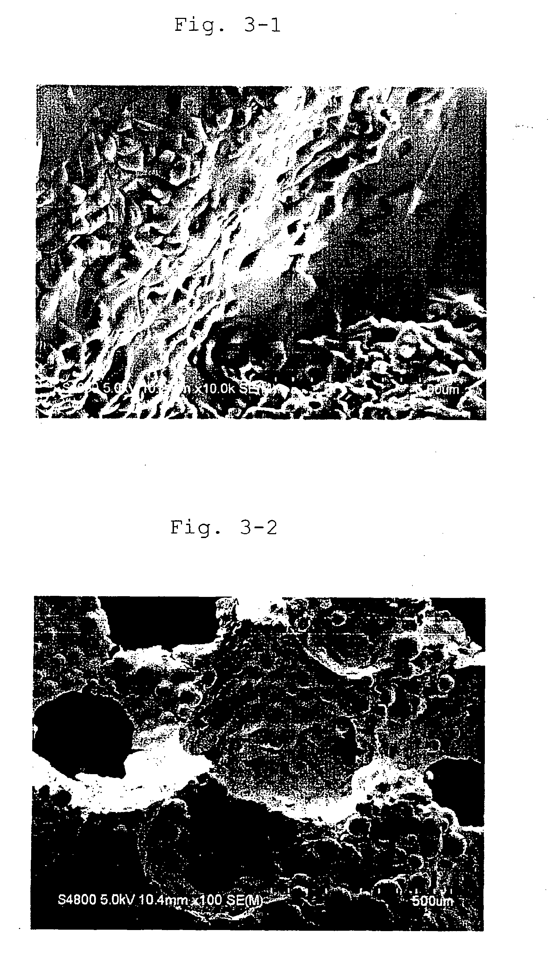

Scanning electron micrographs (× 10000 and × 100) of the obtained sintered body are shown in FIGS. 3-1 and 3-2.

### Example 2

75 g of hollow particles made of alumina-silica having an average particle diameter of 75 µm as a ceramic raw material and 85 g of an aqueous solution of 15% polyethyleneimine were blended, followed by applying ultrasonic, and thereby a hollow particle slurry was prepared.

To the slurry, 50.7 g of titania powder having an average particle diameter of 180 nm, 0.02 g of ammonium polycarbonate and 2.1 g of polyethyleneimine as the dispersant and 15.5 g of pure water as a dispersion solvent were added, followed by agitating and blending for 15 hr by means of a ball mill method, and thereby a mixed powder slurry was obtained.

To the slurry, 2.0 g of Emal (trademark) as the foaming agent was added, followed by agitating, and thereby a foaming slurry was obtained.

Furthermore, 30 g of hollow particles made of alumina-silica having an average particle diameter of 75 µm was added, followed by agitating and blending.

Subsequently, as a gelling agent, 2.5 g of sorbitol polyglycidyl ether was added, followed by pouring in a 150 mm × 150 mmx30mmmold, further followed by moistening and drying, and thereby a molded body of a ceramic porous body was obtained.

The green body was sintered at 1400°C for 2 hr and thereby a 135 mm × 134 mm × 21 mm ceramic porous body (sintered body) was obtained.

The apparent density of the sintered body was 1.25 g/ml and the porosity was 95%. And an average pore diameter was 450 µm.

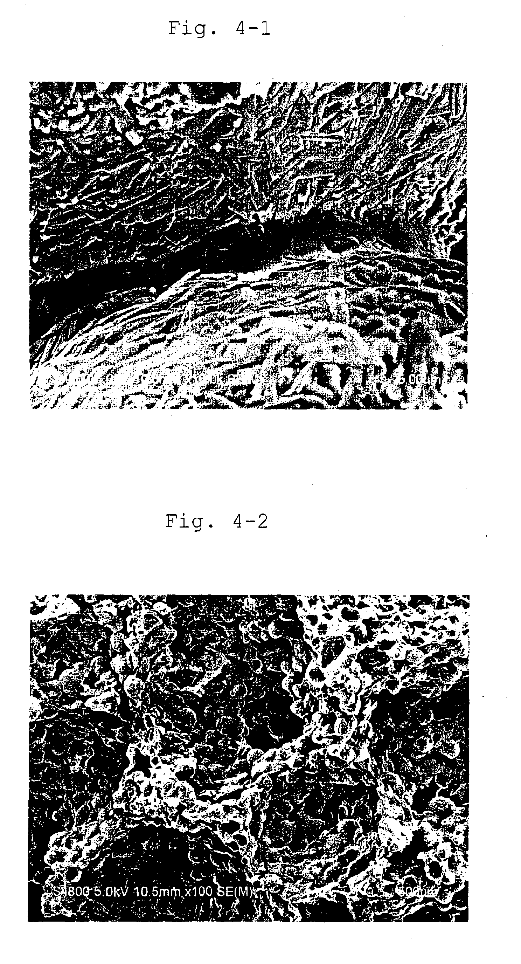

Scanning electron micrographs (× 10000 and × 100) of the obtained sintered body are shown in FIGS. 4-1 and 4-2.

### Comparative Example 1

With, as a ceramic raw material, 810 g of titania powder having an average particle diameter of 180 nm; as a dispersant, 0.41 g of ammonium polycarbonate and 32.4 g of polyethyleneimine; and, as a dispersion solvent, 270 g of pure water, these were agitated and blended for 15 hr by use of a ball mill method, and thereby, a solid particle slurry was prepared.

To the slurry, 4.8 g of Emal (trademark) was added as a foaming agent, followed by agitating, a foaming slurry was obtained.

Subsequently, as a gelling agent, 4.2 g of sorbitol polyglycidyl ether was added, followed by pouring in a 150 mm × 150 mm × 30 mmmold, further followed by moistening and drying, and thereby a green body of a titania porous body was obtained.

The molded body was sintered at 1400°C for 2 hr and thereby a 125 mm × 126 mm × 18 mm titania ceramic porous body (sintered body) was obtained.

The apparent density of the sintered body was 3.89 g/ml and the porosity was 89.8%.

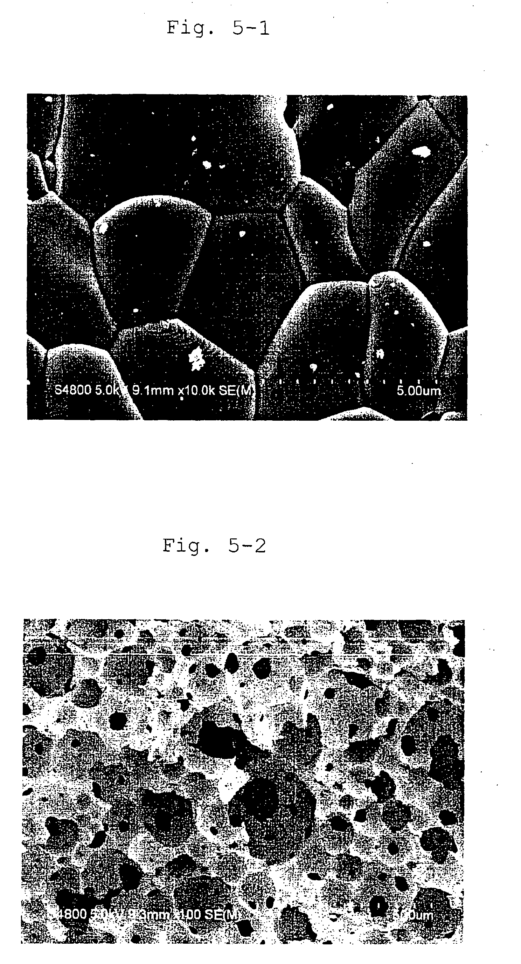

Scanning electron micrographs (× 10000 and × 100) of the obtained sintered body are shown in FIGS. 5-1 and 5-2.

### Example 3

Firstly, as a ceramic raw material, 60 g of hollow particles made of alumina-silica having an average particle diameter of 75 µm and 10 g of titania powder having an average particle diameter of 180 nm, and 85 g of an aqueous solution of 15% polyethyleneimine were blended, followed by applying ultrasonic, and thereby a hollow particle slurry was prepared.

To the slurry, 2.0 g of Emal (trademark) as the foaming agent was added, followed by agitating to foam, and thereby a foaming slurry was obtained.

In the next place, 2.5 g of sorbitol polyglycydyl ether as the gelling agent was added, followed by agitating, further followed by dropping the mixture in liquid nitrogen with a syringe having a nozzle diameter of 500 µm.

The obtained spherical dropped bodies, after drying in a vacuum dryer, were sintered at 1200°C for 2 hr and thereby spherical ceramic sintered bodies having a diameter of 0.5 to 5 mm were obtained.

The porosity of the sintered body was 96.5%. The apparent density was 1.05 g/ml. And an average pore diameter was 400 µm.

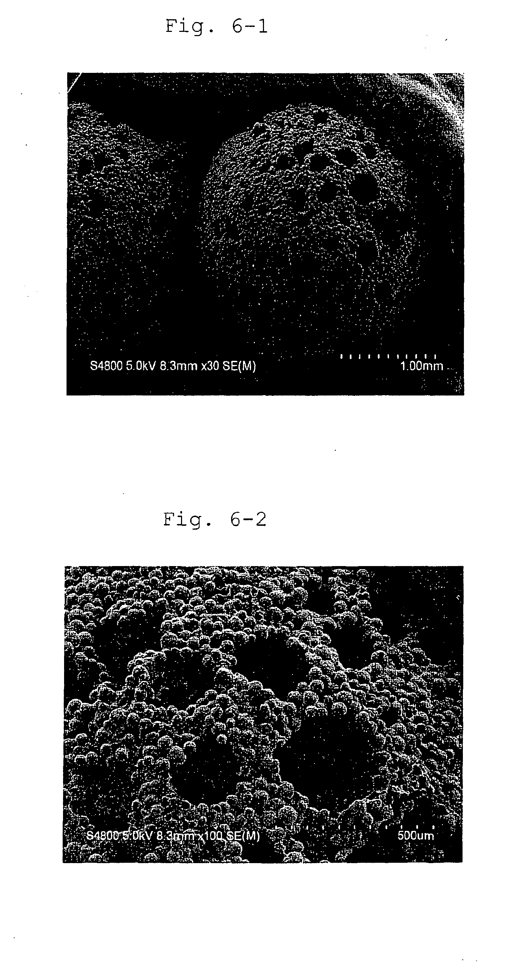

Scanning electron micrographs (× 30 and × 100) of the obtained sintered body are shown in FIGS. 6-1 and 6-2.

From photographs of FIGS. 6-1 and 6-2, it is found that the sintered body is a porous body where spherical particles are sintered each other and has spherical open pores interconnected all over an entirety.

### Comparative Example 2

With, as a ceramic raw material, 810 g of titania powder having an average particle diameter of 180 nm; as a dispersant, 0.41 g of ammonium polycarbonate and 32.4 g of polyethyleneimine; and, as a dispersion solvent, 270 g of pure water, these were agitated and blended for 15 hr by use of a ball mill, and thereby, a slurry was prepared.

To the slurry, 4.8 g of Emal (trademark) was added as a foaming agent, followed by agitating to foam, and thereby, a foaming slurry was obtained.

Subsequently, as a gelling agent, 4.2 g of sorbitol polyglycidyl ether was added, followed by agitating, further followed by dropping the slurry in liquid nitrogen with a syringe having a nozzle diameter of 500 µm.

The obtained spherical dropped bodies, after drying in a vacuum dryer, were sintered at 1200°C for 2 hr and thereby spherical ceramic sintered bodies having a diameter of 0.5 to 5 mm were obtained.

The porosity of the sintered body was 84.8%.

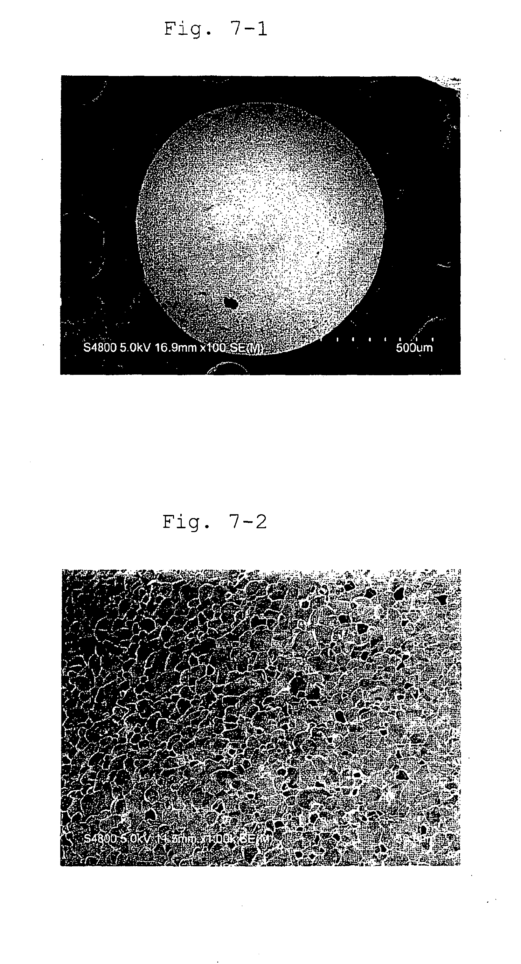

Scanning electronmicrographs (× 100 and × 1000) of the obtained sintered body are shown in FIGS. 7-1 and 7-2.

From electron micrographs of FIGS. 7-1 and 7-2, it is confirmed that a surface of obtained spherical ceramic sintered body is a dense layer where open pores are clogged.

### Example 4

60 g of glass hollow particles having an average particle diameter of 40 µm, 50 g of glass solid particle having an average particle diameter of 300 nm and 50 g of an aqueous solution of 15% polyethyleneimine were blended, followed by applying ultrasonic, and thereby a slurry was prepared.

To the slurry, 40 g of pure water and 2.5 g of Emalgen (trademark) were added, followed by agitating to foam, and thereby a foaming slurry was obtained.

In the next place, 2.5 g of sorbitol polyglycydyl ether as the gelling agent was added, followed by agitating, further followed by dropping the mixture in liquid nitrogen with a syringe having a nozzle diameter of 500 µm.

The obtained spherical dropped bodies, after drying in a vacuum freeze dryer, were sintered at 650°C for 2 hr and thereby spherical glass sintered bodies having a diameter of 0. 8 to 5 mm were obtained.

The porosity of the sintered body was 96.8%, the apparent density was 0.95 g/ml and an average pore diameter was 300 µm.

## Claims

1. A porous material comprising a plurality of spherical pores, wherein some of spherical pores are as closed pores and some other spherical pores are interconnected all over to be open pores.

2. The porous body of claim 1, wherein the porosity thereof is 50% or more and 98% or less and an average pore diameter of spherical pores communicated all over Fis 20 µm or more and 1000 µm or less.

3. The porous body of claim 1 or 2, wherein a skeleton of the porous body is formed of 10% by weight or more of ceramic or glass hollow particles.

4. The porous body of claim 3, wherein a particle diameter of the hollow particle is 400 µm or less.

5. The porous body of any one of claims 1 to 4, wherein the apparent density thereof is 0.3 g/ml or more and equal to or less than 60 % of a theoretical density obtained by a ceramic or glass raw material composition.

6. The porous body of any one of claims 1 to 5, wherein the porous body is made of at least one kind of calcium phosphate based ceramics, alumina, titania, zirconia, calcium carbonate, silicon carbide, silicon nitride, silica, alumina-silica and mullite.

7. The porous body of any one of claims 1 to 6, wherein the porous body is a spherical porous body having the apparent density of 0.8 g/ml or more and 2.0 g/ml or less and a diameter of 50 µm or more and 5 mm or less and used as a scaffold.

8. The porous body of claim 7, wherein the porous body is used for microcarrier culture.

9. A producing method for a porous body, comprising:
preparing a foaming slurry by agitating and blending glass or ceramic hollow particles, glass or ceramic solid particles, a dispersant and a foaming agent in a dispersing medium to foam;
obtaining a green body by gelating the foaming slurry, followed by dewatering and drying; and
sintering the molded body.

10. A producing method for a porous body, comprising:
preparing a foaming slurry by agitating and blending a dispersion medium containing glass or ceramic hollow particles having an average particle diameter of 1 µm or more, a dispersant and a foaming agent to foam;
obtaining a dried body by dropping the foaming slurry in liquid nitrogen, followed by freeze drying in a vacuum; and
sintering the dried body to obtain a spherical porous body having an open pore interconnected all over.

11. The producing method for a porous body of claim 10, wherein, in the preparing a foaming slurry, ceramic or glass solid particles having an average particle diameter of 1000 nm or less are added.
